# EUROPEAN PATENT SPECIFICATION

(11) **EP 3 997 588 B1**
(45) Date of publication and mention of the grant of the patent: **09.12.2026**
(21) Application number: 19883325.3
(22) Date of filing: 21.08.2019
(51) Int. Cl.: G06F 16/90, G06F 16/21

(54) **METHOD FOR STORING DATA TO AND RETRIEVING DATA FROM AT LEAST ONE DATA STORAGE, SYSTEM, USE, COMPUTER PROGRAM, AND COMPUTER READABLE MEDIUM**
VERFAHREN ZUR SPEICHERUNG VON DATEN UND ZUM ABRUF VON DATEN AN MINDESTENS EINEM DATENSPEICHERSYSTEM, SYSTEM, VERWENDUNG, COMPUTERPROGRAMM UND COMPUTERLESBARES MEDIUM
PROCÉDÉ DE STOCKAGE DE DONNÉES ET DE RÉCUPÉRATION DE DONNÉES À PARTIR D'AU MOINS UNE MÉMOIRE DE DONNÉES, SYSTÈME, UTILISATION, PROGRAMME INFORMATIQUE ET SUPPORT LISIBLE PAR ORDINATEUR

(43) Date of publication of application: 18.05.2022
(73) Proprietor: Siemens Industry Software NV, 1930 Zaventem (BE)
(72) Inventor: ANDRYSCO, Nathan, Round Rock, Texas 78665 (US)
(74) Representative: Siemens Patent Attorneys
(86) International application number: PCT/US2019/047414
(87) International publication number: WO 2021/034323

(56) References cited:
- TIWARI VIBHA ET AL: "Designing sparse sensing matrix for compressive sensing to reconstruct high resolution medical images", COGENT ENGINEERING, vol. 2, no. 1, 16 March 2015 (2015-03-16), pages 1017244, XP093102509, DOI: 10.1080/23311916.2015.1017244
- ANONYMOUS: "Sparse matrix - Wikipedia", 30 May 2018 (2018-05-30), XP055564940, Retrieved from the Internet <URL:https://web.archive.org/web/20180530163204/https://en.wikipedia.org/wiki/Sparse_matrix> [retrieved on 20190306]
- JIAXING ZHANG ET AL: "Impression Store: Compressive Sensing-based Storage for Big Data Analytics", USENIX, USENIX, THE ADVANCED COMPUTING SYSTEMS ASSOCIATION, 17 June 2014 (2014-06-17), pages 1 - 6, XP061016531
- M TANOOJ KUMAR ET AL: "Cloud Storage Optimization Approach Using Compressive Sensing", 1 February 2018 (2018-02-01), pages 21 - 26, XP055698073, Retrieved from the Internet <URL:http://www.ijerd.com/paper/vol14-issue2/Version-1/C1402012126.pdf> [retrieved on 20200525]

## Description

The invention relates to a method for storing data to and retrieving data from at least one data storage. The invention furthermore relates to a system for storing and retrieving data, the use of the compressive sensing technique, a computer program and a computer readable medium.

Software simulations of physical phenomena for example are increasingly becoming more complex as the computational powers of the available machines become increasingly better. More complex simulations also require more available storage so that the results of these simulations can be saved and then analyzed.

For state-of-the-art simulations, this storage requirement can be on the order of terabytes. Even for much smaller simulations, gigabyte sized save states is not uncommon.

Data storage, for example simulation data storage can be reduced by using various formats. For example, "zip" formats (e.g..zip, .gzip, .rar, etc.) can be used. These formats are lossless.

If some error can be tolerated, lossy compression algorithms (for example .jpeg) can also be applied. Often exact data is not necessarily needed for many simulation post-processing applications. Therefore, lossy storage is an option to save data storage space. A widely used form of lossy compression is the so called discrete cosine transform (DCS). It is used for image compression formats, such as JPEG, video coding standards, such as MPEG and audio compression formats, such as MP3.

From the documents "JIAXING ZHANG ET AL: "Impression Store: 1-20, Compressive Sensing-based Storage for Big Data Analyt-ics", USENIX, USENIX, THE" and from
"M Tanooj Kumar ET AL: Cloud Storage 1-20 Optimization Approach Using Compressive Sensing", 1 February 2018 (2018-02-01)", compression and reconstruction of data via compressive sensing in known.

From Tiwari Vibha ET AL: "Designing sparse sensing matrix for compressive sensing to reconstruct high resolution medical images", Cogent Engineering, vol. 2, no. 1, 16 March 2015 (2015-03-16), page 1017244, XP093102509, DO1: 10.1080/23311916.2015.101724 compressive sensing of high resolution medical images is known.

From Richard G. Baraniuk ET AL: "Compressive sensing: A new approach to seismic data acquisition", The Leading Edge, vol. 36, no. 8, 1 August 2017 (2017-08-01), pages 642-645, XP055735831, US ISSN: 1070-485X, 001: 10.1190/tle36080642.1 compressive sensing of seismic data is known.

It is an object of the present invention, to provide an alternative method which enables efficient compression of data storage and which can be carried out with comparably little effort. It is a further object of the present invention to provide a system for carrying out such a method.

The invention is defined in the independent claims. Advantageous modifications are set forth in the dependent claims.

The present invention in other words provides a novel lossy compression scheme that can be applied to help combat the ever growing storage problem. The invention proposes the use of compressive sensing as a storage solution. According to the invention, compressive sensing is used as a data compression algorithm/method.

The comparably new technique of compressive sensing (also called compressed sensing, compressive sampling, sparse sampling) is known from the field of signal detection. The basic idea of compressive sensing is that the sparsity of a signal that has to be measured can be exploited to reconstruct the full signal, but needing only a few measured samples instead of the much higher sampling rate of traditional Nyquist-Shannon sample theory (where this theory assumes the signal is dense). In practice, most signals across all domains are sparse and compressive sensing can be applied.

According to the present invention, compressive sensing is transferred to the field of data storage, in particular applied to obtain a reduction in data storage space. While compressive sensing so far has only been used as a means of reducing the number of measurement points needed when trying to reconstruct some real-life signal, the present invention is kind of a reverse of that. It starts from having the full signal/full data (received data), for example an entire image or entire simulation data, and creates a selection from the full data to reduce the amount of information that needs to be stored on a data storage, for example one (or more) disk(s).

Preferably, the received (full) data that needs to be stored comprises or is composed by a number of elements, in particular values/numbers. In case of an image for example, the data comprises - as known from the state of the art - a number of pixels arranged in columns and rows like a 2D grid or matrix. Each pixel usually is represented by one or more values/numbers, for example RGB-value(s). A set of data that is outputted from a computational simulation can for example comprise or be composed by a number of values/numbers representing any physical quantity/quantities.

That only part of the data to be stored is selected preferably means or includes that only some of the elements of the data to be stored are selected while others are not selected but discarded.

The selection preferably is such that from all the elements of the data to be stored (received data), some elements are randomly selected.

A part of the received data can be selected by sampling the data. Then a sampling, in particular a sparse sampling is created/obtained from the received (full) data.

In the context of the present application "sparse" in particular means that the number of elements/values that are not selected but discarded is more than the number of the selected elements/values that are being stored. Accordingly, if the received data comprises 100 elements, a sparse sampling would be obtained if a maximum number of 49 elements would be selected and at least 51 elements be discarded. It should be noted that the selection, in particular sampling within the framework of the present invention can be such that a sparse selection/sampling is obtained but this is not necessary. In theory, even if all but one elements of received data would be selected/sampled and stored, a compressive sensing reconstruction algorithm can be used to obtain reconstructed data from this "reduced" data.

Usually, the received data that has to be stored will have a structure. The received data might for example comprise a number of elements in a grid, for example a 2D grid.

Preferably, information about the size of the received data is stored together with the reduced data, in particular together with selected elements. The information about the size of the received data can for example be received before or together with the received data. Of course, it is also possible that the size of the data is determined.

Alternatively or in addition, information about the locations/positions of the selected elements within the received (full) data, In particular within the received (full) data's structure is stored together with the selected elements.

If the received data is a grid, for example a 2D or 3D grid comprising a number of elements, in particular values, the grid size will preferably be stored together with the selected elements. A grid size could for example be 10x10 or 100x100 or 1000x1000 in case of a 2D grid or 10x10x10 or 100x100x100 or 1000x1000x1000 in case of a 3D grid as known from the state of the art.

As regards the selected elements' positions, one possibility would be that together with each selected element, in particular value, coordinates of the respective element within the data (structure) are stored.

The selected elements together with information about their locations/positions in the original, received data can for example be stored in a sparse matrix format.

From the state of the art several sparse matrix formats are known (see for example https://en.wikipedia.org/wiki/Sparse_matrix). A sparse matrix format usually comprises the values of a sparse matrix that are not zero and information about their positions within the matrix.

Within the framework of the present invention, the selected data together with information about the positions of the elements are stored in any known sparse matrix format.

One example would be the so called Coordinate list or COO format which stores a list of (row, column, value) tuples for a matrix. It has shown that this format is especially suitable in case of randomly selected elements.

The use of a sparse matrix format has shown particularly useful when less than 25% of the values are non-zero. Accordingly, a sparse matrix format is preferably used as a storage format for the selected data if 25% or less of the received (full) data is selected.

According to another preferred embodiment, it is determined, in particular calculated, which data storage format requires the least amount of data space and that format is used for storing the selected data in particular together with information of the positions of selected elements.

According to a particularly preferred embodiment, part of the received data is selected by randomly sampling the received (full) data. If the received data is for example at least one image, a random sampling of pixels or values/numbers representing the pixels can be performed to obtain the reduced data.

One possible way to randomly select, in particular randomly sample would be to use a random number generator to pick random elements, in particular values of the received data. Any modern programming language's (for example C++, Java, Python, ...) random number generation functionality could be used for this purpose. If there were for example 100 values in a matrix, and only 10%, i.e. 10 values shall be randomly picked/selected, one can call a programming language's random function 10 times asking it for an integer in the range [1, 100]. Of course there is a chance that one could get a repeated value (i.e. the first time one asks for a value one could get 37 and then on the 9^{th} time one could also get a value of 37), so some care might need to be taken. Or for certain languages, there already is a sophisticated enough mechanism implemented that you are guaranteed to get unique numbers.

It should be noted that for the most part, there is no such thing as truly random numbers in software. The random number generators, as available as part of most programming languages, usually start with a user specified seed value (some integer). When a random number is requested, this seed value is transformed (via multiplication, addition, and modulo) into another integer value. This value will then be divided by the maximum possible integer value allowed by random number generator, providing a value between (0, 1). When another number is requested, this previous integer value is again translated to another integer, providing another value to the user. These values are considered pseudo-random since they really are just a fixed sequence of integers. But the underlying algorithm used to generate this sequence makes the values seem random. There are measures of this "randomness" for each generator type. In practice, a current system time can be used as the initial seed value so that one would get a different value sequence each time the random number generator is run.

Within the context of the present application, pseudo-random-numbers being generated with known software mechanisms are considered as random. Accordingly, a selection, in particular sampling that is performed with the use of pseudo-random numbers is considered a random selection, in particular random sampling.

There are also some hardware mechanisms available that actually do generate random numbers by essentially observing the chaotic nature of atomic scale events. Something like this might be available in modern CPUs and a language like C++ might have a library available where the user could use these mechanisms. But the software pseudo-random values are more than sufficient within the framework of the present invention so such hardware mechanisms can be used but are not required.

The selection/sampling preferably is performed with a sampling rate that is lower than the sampling rate according to Nyquist Shannon sampling theory.

Due to selecting only part of the data and discarding the rest, in particular due to sampling, the reduced data is obtained. The reduced data preferably comprises a number of elements, for example values, that is lower (reduced) as compared to the number of elements of the received (full) data.

When the "full" signal is wanted again, at least one compressive sensing reconstruction algorithm is applied to the reduced data, in particular the sparse samples. A compressive sensing reconstruction algorithm in other words is a reconstruction algorithm intended for reconstruction in the context of compressive sensing/known from the field of compressive sensing for signal reconstruction.

Within the framework of the reconstruction, it is possible that the elements/values that have not been selected but discarded are represented as zeroes. It is also possible that there is for example just a list of the selected elements/values and their corresponding locations in the data, for example grid.

When the reduced data comprises a number of elements that is lower than the number of elements of the received (full) data, the number will rise again due to reconstruction. This is in complete analogy to conventional compressive sensing where a comparably small number of measurements, in particular less than necessary according to the Nyquist Shannon sampling-theorem, are taken and by reconstruction, more samples of the signal are obtained.

The present invention offers the big advantage of helping to strongly reduce necessary storage space.

A preferred embodiment of the invention is characterized in that a user specifies how much of the received data is selected. As regards the amount/proportion/percentage of the data that is selected, the expression sparsity or sparsity value can be used. A user can accordingly select a sparsity/sparsity value and by that define how strongly the data is compressed or reduced before saving. A user can pick any rate of reduction to reduce the storage requirement by that sparsity amount.

A sparsity value of 5% for example, could represent only selecting 5% of the total elements, in particular values to store. From a received (full) data with a size of 1 GB, only 50 MB would be selected which means that while for example previously 1 GB had to be stored, now only 50 MB will be stored. A chosen sparsity value of 10% would mean that from for example 1 GB only 100MB will be selected/sampled and stored.

How much of the (full) received data will be selected, in particular sampled, can be chosen for example by a user on a case to case basis. The amount can of course also be predefined, for example in a system which is used for performing the steps of the inventive method.

When selecting a sparsity value it usually will be at a tradeoff of accuracy. Of course, the more dense the selection/sampling of the data to be stored, i.e. the more dense the reduced data, the better the reconstruction, and more closely the reconstructed result will match the ground truth. Nevertheless, when using compressive sensing, the reconstruction algorithm often enables a surprisingly accurate result with for example as little as 1% sampling needed. Accordingly, a very high reduction rate in storage space can be achieved with the present invention while at the same time data of sufficient good quality can be provided on demand from the reduced, saved part of the data.

According to a preferred embodiment less than 20%, preferably less than 10%, particularly preferably less than 5% of the received data are selected to obtain the reduced data. In these cases, reduced data in an amount of less than 20 %, preferably less than 10%, particularly preferably less than 5% of the received data is obtained. It has shown that these values enable a very high storage saving rate and at the same time deliver good results as regards the reconstructed data.

The reconstruction preferably is applied/performed automatically, for example in reaction to receiving a request for retrieval of stored data. In this case, no manual intervention of a user is necessary. The user will not notice any difference to a conventional data storage procedure known from the state of the art - expect for maybe some time delay because of the reconstruction.

Another particularly preferred embodiment is characterized in that the data is in addition being compressed by use of at least one lossy compression method and/or at least one lossless compression method after it has been received and before part of it has been selected and/or after part of it has been selected and before it is stored.

In this embodiment of the present invention, the inventive compressive sensing approach for data storage is not a replacement for conventional lossy and/or lossless compression schemes known from the state of the art, but is additive to the very large library of available storage schemes. It has shown that such a combination is particularly advantageous.

In case at least one conventional lossy and/or lossless compression method is additionally applied, at least one corresponding inverse compression method will preferably be applied after the request for retrieval of data.

The at least one corresponding inverse compression (in particular decompression) method can in particular be applied before or after the at least one compressive sensing reconstruction algorithm is used.

A conventional method/technique that can be used in addition can for example be the so called discrete cosine transform (DCS) or at least one method/technique based thereon. For reversing the conventional compression, corresponding inverse methods can be used as is known from the state of the art.

Especially if images or videos are to be stored, the inventive approach can for example be applied together with JPEG or MPEG compression. A combination of the inventive approach and conventional compression can be particularly preferable when used to reduce image/movie storage since the various image storage schemes (for example MPEG) are just a conglomeration of various compression techniques.

The one more of the conventional lossy and/or lossless compression methods can be applied for example after the part of the data has been selected and the reduced data was obtained, in particular after a sparse number of samples (reduced data) has been recorded/stored. The traditional data compression can then be applied on top.

It is also possible that one or more conventional lossy and/or lossless compression techniques are applied before the part of the data is selected, in particular applied to the data before the step of reduction according to the present invention takes place. In this case, the conventional compression is applied to the received data.

Of course is also possible that one or more conventional lossy and/or lossless compression methods are applied to the data before the selection, i.e. to the received data, and that one or more conventional lossy and/or lossless compression methods are applied to the data after the selection, i.e. to the reduced data.

For example, a jpeg compression could first be applied in particular in case the received data is an image. After the jpeg-compression there will still be an image (2D matrix) of (DCS) values. Random values from this image/2D matrix can then be picked and eventually reconstructed to provide the full DCS matrix (and then inverse DCS can be applied to get the original image).

A lossless compression scheme, like Huffman coding, could also be used for compression, in particular compressing a 2D matrix. Again, the result is still a 2D matrix where random samples can be taken and then eventually reconstructed (and then the Huffman coding applied to get the original matrix).

One example of combining compressive sensing with other algorithms in reverse order would be that random samples are taken for example from a 2D matrix (received data), and from those values, a Huffman code could be used to further reduce the storage. Then to reconstruct, the Huffman code is interrupted and expands to the random sample values, which then are used to reconstruct the 2D matrix.

As regards the reconstruction algorithm, it should be noted that any reconstruction algorithm(s) that is (are) suited/used/developed for the field of compressive sensing, in particular signal-reconstruction in the field of compressive sensing, can be used for the reconstruction within the framework of the present invention, in particular for reconstruction starting from the saved, reduced data.

Suitable examples are reconstruction algorithms (or equations, the two expressions are used synonymously) according to the so called L₁-optimization and/or according to the so called greedy approach.

Therefore, a further embodiment of the present invention is characterized in that the reconstructed data is obtained from the reduced data by use of at least one reconstruction algorithm/equation according to L₁-optimization.

Alternatively or in addition, the reconstructed data can be obtained from the reduced data by use of at least one reconstruction algorithm/equation according to a greedy approach.

Further reconstruction algorithms/equations from the field of compressive sensing that can alternatively or in addition be used for reconstruction within the framework of the present invention are algorithms/equations according to the so called convex optimization approach and/or the thresholding approach and/or the combinatorial approach and/or the non-convex approach and/or the Bayesian approach. These approaches are for example described in the paper "A Systematic Review of Compressive Sensing:Concepts, Implementations and Applications" by M. Rani, S. B. Dhok and R. B. Deshmukh, IEEE Access, Vol. 6, pp. 4875-4894, January 2018 which gives an overview of compressive sensing including an overview of different reconstruction approaches.

To give one example, algorithms/equations (1) to (4) disclosed on pages 4876 and 4877 of this paper can be used as reconstruction algorithms for the inventive approach.

Reconstruction algorithms according to any one of the aforementioned approaches, in other words algorithms that are based on any one of the aforementioned approaches have proven useful in the field of compressive sensing and can also be used for the reconstruction within the framework of the present invention, i.e. for a reconstruction starting from the saved, reduced data.

The basics of compressive sensing and in particular the sparse reconstruction using the L₁-approach and the greedy approach are for example also described in the paper "A User's Guide to Compressed Sensing for Communications Systems" by K. Hayashi, M. Nagahara an T. Tanaka, IEICE Trans. Commun., Vol.E96-B, No. 3, March 2013. The reconstruction algorithms/equations disclosed therein can also be used for obtaining the reconstructed data from the reduced data, for example equations (23) to (31) disclosed on page 688 of this paper might be used in this context. In this publication the papers "Compressed sensing" by D. L. Donoho, IEEE Trans. Inf. Theory vol. 52, no. 4, pp. 1289-1306, April 2006 and "Decoding by linear programming" by E. J. Candes and T. Tao, IEEE Trans. Inf. Theory vol. 51, no. 12, pp. 4203-4215, December 2005 and "Robust uncertainty principles: Exact signal reconstruction from highly incomplete frequency information", IEEE Trans. Inf. Theory, vol. 52, no. , pp. 489-509, February 2006 are cited inter alia, which also disclose suitable compressive sensing reconstruction algorithms.

The paper "DR2-Net: Deep Residual Reconstruction Network for Image Compressive Sensing" from H. Yao, F. Dai, D. Zhang, Y. Ma, S. Zhang, Y. Zhang, and Q. Tian, archXiv:1702.05743v4 [cs.CV] dated November 16, 2017, disclose deep learning-based reconstruction algorithms for compressive sensing. This rather new reconstruction technique uses neural networks. One or more of the reconstruction algorithms/equations disclosed in this newer paper can also be used to obtain the reconstructed data from the reduced data within the framework of the present invention.

A further publication regarding compressive sensing is the paper "Sparse representation for wireless communications: A compressive sensing approach" by Z. Qin, Y. Liu, Y. Gao, and G. Y Li, IEEE Signal Processing Magazine 35.3 (2018): 40-58. The reconstruction algorithms disclosed therein are further examples of algorithms that can be used to obtain the reconstructed data from the reduced data.

The same holds for the paper "Compressive Sensing Techniques for Next-Generation Wireless Communications" by Z. Gao, L. Dai, S. Han, C.-L. I, Z. Wang and L. Hanzo, IEEE Wireless Communications 25.3 (2018): 144-153, which also disclose reconstruction algorithm suitable for use in the framework of the present invention.

It is possible that the data to be stored is received as a set of data, in particular as one file, and/or a stream of data. The selection of only a part of the received data can for example take place after the file/set of data/stream has been fully received.

It is of course also possible that the selection of part of the received data already starts while the receiving process still goes on. Elements, in particular values can for example be selected while data streams in. If data is received as a stream, an information of the data size, in particular data dimensions, will preferably be received or determined or provided first and then a number of elements/values can be picked. If for example the information is provided/determined/received that data with dimensions of 5x5 will be streamed, the values at positions [1, 2] and [3, 4] could for example randomly be picked and only those values would be stored, preferably together with their positions.

It is of course also possible that data is streamed after the selection process took place, that means reduced data is streamed in particular to the location of the at least one data storage. In this case, data will be received at a first position, a part will be selected and the selected part, in particular elements will be streamed to a second place, in particular to the place of storage. This can help reduce the bandwidth of the streaming process.

The data that is received and has to be stored can be data that was generated within the framework of computational simulations, in particular computational simulations of physical phenomena. The data that is received and has to be stored can comprise or can be composed by at least one field function.

This is to be understood only exemplary. Data from other sources/other kind of data can of course also be stored in a space-saving way and be reconstructed on demand according to the present invention.

An example of how compressive sensing can be applied for simulation data storage can be given when considering a simulation that records a scalar field across a regular 2D grid (when comparing a 2D-scalar field with an image, each (x, y) position of the scalar field in the 2D grid would be equivalent to an image's pixel position). Instead of storing the full/complete scalar field (e.g. 100% sampling), for example only 5% of the values could be stored on the at least one data storage according to the present invention and the "full/complete" scalar field can be reconstructed when retrieval of/access to the stored simulation data is requested, for example by a user. In the example given, one would have reduced the storage requirement of the scalar field by 95 % since only 5% of the values will be stored. It should be noted that here quotation marks are used around "full/complete" because the reconstructed scalar field will of course not be identical, in other words "as full" or "as complete" as the field before the storage procedure. But the quality can and will, as mentioned above, be surprisingly good even if only a small part of the received data is stored which means a high sparsity value is selected.

It should be noted that of course, grids in higher dimension (for example 3D) or values stored on something more irregular (e.g. values per vertex of an irregular triangle mesh) can also be stored and reconstructed in a similar fashion.

As regards the inventive system, it should be noted that each of its modules can be a hardware module and/or a software module or a module that comprises or is composed of a combination of hardware and software. In case a module is composed of software, it is a purely functional module.

Also, the inventive system can be embodied and/or configured for any one of the preferred features described above or for any combination of these features.

The modules and the at least one data storage of the inventive system can furthermore be arranged at the same place or close to each other. Nevertheless, this is not necessary. It is for example also possible that the receiving module is located at a user's site while the reducing module and the at least one data storage and maybe the reconstruction module is located somewhere else, for example in a data center. The data center and the user site can for example, as is known from the state of the art, be connected via internet.

The invention further regards the use of the compressive sensing technique for storing data in a space-saving way.

The invention also regards a computer program comprising instructions which, when the program is executed by at least one computer, cause the at least one computer to carry out the inventive method.

The invention furthermore regards a computer-readable medium comprising instructions which, when executed on at least one computer, cause the at least one computer to perform the steps of the inventive method.

The computer-readable medium can be, for example, a CD-ROM or DVD or a USB or flash memory. It should be noted that a computer-readable medium should not be understood exclusively as a physical medium, but that such a medium can also exist in the form of a data stream and/or a signal representing a data stream.

Further features and advantages of the present invention become clear by the following description of embodiments of the invention with reference to the enclosed drawing.

The figure shows:
Figure 1 a purely schematic vies of an exemplary embodiment of an inventive system; and
Figure 2 steps of an exemplary embodiment of the inventive method.

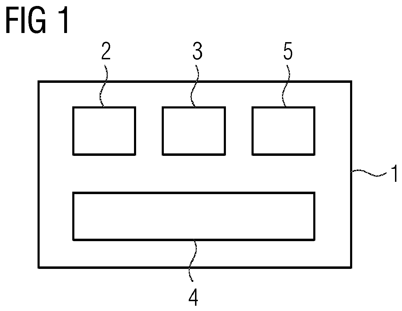

Figure 1 shows a purely schematic view of an inventive system 1for storing and retrieving data. The system 1 comprises a receiving module 2, a reducing module 3, one data storage 4 and a reconstruction module 5.

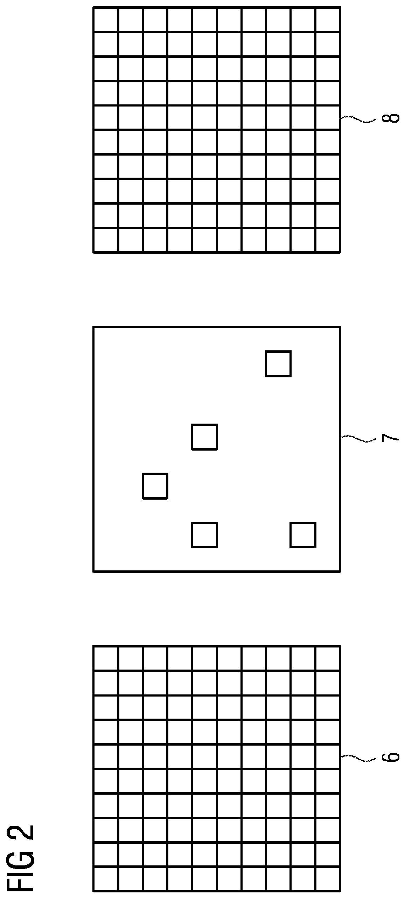

The receiving module 1 is embodied and/or configured for receiving data to be stored (received data 6, see figure 2).

The reducing module 3 is embodied and/or configured for obtaining reduced data 7 (see figure 2) by selecting only a part of received data 6 being and/or having been received by the receiving module 1. The reducing module 2 is furthermore embodied and/or configured for compressing data with one conventional lossy and/or lossless compression method that is known from the state of the art after part of the data has been selected.

It should be noted that alternatively or in addition receiving module 2 could be embodied and/or configured for compressing received data 5 with one conventional lossy and/or lossless compression method that is known from the state of the art. Also, alternatively or in addition at least one further module, compression module (not shown) could be disposed, the compression module being embodied and/or configured for compressing received data 6 and/or reduced data 7 with one conventional lossy and/or lossless compression method that is known from the state of the art.

The data storage 4 is embodied and/or configured for storing reduced data 7 being reduced by the reducing module 3. The data storage 4 is a conventional data storage as known from the state of the art, namely a hard disk.

The reconstruction module 5 is embodied and/or configured for generating reconstructed data 8 from reduced data 7 saved on the data storage 4 by use of at least one compressive sensing reconstruction algorithm. I particular in case reducing module 3 (or receiving module 2 or a an additional compression module) is embodied and/or configured to apply at least one conventional compression method/technique, reconstruction module 5 preferably is additionally be embodied and/or configured to reverse the at least one conventional compression method/technique before and/or after using at least one compressive sensing reconstruction algorithm.

In the example shown all modules 2, 3, 5 of system 1 are software-implemented, functional modules.

It should be noted that while system 1 is shown in the purely schematic figure 1 as a unit, the system's modules 2, 3, 5 and the data storage 4 do not have to be located at the same place or close to each other. The modules 2, 3,5 can for example be implemented at a user's site, their software can for example run on a user's PC and the data storage 4 can be a cloud data storage 4 that is accessible via internet. It is also possible that a data storage 4 is used which is located at a user's site while the modules 2, 3, 5 are implemented in a cloud.

With use of the system 1 shown in figure 1, an exemplary embodiment of the inventive method for storing data to and retrieving data from at least one data storage 4 can be performed, which uses the compressive sensing approach for the storage and data and which will now be described in detail.

In a first step, data 6 to be stored is received by receiving module 2. In the described example, data 6 from a simulation of physical phenomena is received by receiving module 2. The simulation records a scalar field across a regular 2D grid. The data comprises field functions. Figure 2 shows, in a purely schematic manner, a 2D grid being the received data 6. Figure 2 shows - for reasons of a simplification - a 10x10 grid. Accordingly, the scalar field has 100 (x, y) positions and comprises 100 elements, namely values. In figure 2 each of the small boxes represent one of the (x, y) positions of the grid and by that one of the data's elements/values. It should be noted that while in the purely schematic figures a rather small 10x10 grid is exemplary shown, the grid size of received data 6 in reality can and usually will be higher, for example 100x100 or 1000x1000.

Furthermore, the data to be stored being simulation data is to be understood purely exemplary. Data from other sources and/or other kind of data can of course also have to be stored. For example, data to be stored could also be one or more image files, videos or other kind of data.

From the received data 6, namely the 2D grid outputted from the simulation, the reducing module 3 selects only part to obtain reduced data 7. Module 3 obtains reduced data 7 from the received data 6 in detail by randomly sampling the received data 6, in detail randomly sampling the 2D grid 6. In this way, a sparse sampling of the received data 6 is created and the reduced data 7 is obtained. Module 3 is embodied and/or configured to do so.

In the described example, the sparsity value is selected to be 5%, in particular by a user. This means only 5% of the received (full) data 6 is selected, namely only 5 values. The size of the reduced data 7 accordingly is only 5% of the size of the received data 6. If for example a scalar field with a size of 100MB is received, the size of the reduced data 7 is only 5MB. In the example given, one would have reduced the storage requirement of the scalar field by 95% since only 5% of the values are selected/sampled.

For the random sampling a modern programming language's (for example C++, Java, Python, ...) random number generation functionality is used. The reducing module 3 is embodied and/or configured to do so. For the example shown, the programming language's random function is called 5 times asking it for an integer in the range [1, 100]. If the grid size is larger, for example 100x100, the random function would be called 500 times.

In figure 2 it is shown - in a purely schematic way - that the reduced data 7 comprises only some of the elements/values of the received data 6.

In the next step, at least one conventional lossy and/or lossless compression method, known from the state of the art, can additionally be applied to the reduced data 7 by reducing module 3 which can embodied and/or configured accordingly. The additional compression can of course - in addition or alternatively - be applied before the step of random sampling.

The compressive sensing approach for data storage in this case is not a replacement for (one or more) conventional lossy and/or compression schemes, but is additive.

A conventional compression method/technique that can be used in addition can for example be the so called discrete cosine transform (DCS) or at least one method/technique based thereon, for example jpeg compression. Alternatively or in addition the so called Huffmann code could be used as an additional (lossless) conventional compression method.

In case of receiving an image for storage it is for example possible to first apply jpeg compression which would result in another image (full 2D matrix) of (DCS) values. Random values could then be picked from this image/matrix to obtain the reduced data 7.

One example for reverse order would be that first random samples are taken/ sampled from the received data 6, and from those values, a Huffman code could be used to further reduce the storage.

After the additional compression (or the random selection/sampling), the obtained reduced data 7 is stored on data storage 4.

Together with the reduced data 7 information about the size of the originally received (full) data 6 is stored.

Also, the reduced data 7 is stored together with information about the locations/positions of the selected elements within the received data's 6 structure. In the example described herein, a sparse matrix format is used for the reduced data 7, namely the so called Coordinate list or COO format which stores a list of (row, column, value) tuples for a matrix. It has shown that this format is especially suitable in case of randomly selected elements.

As a next step, a request for retrieval of the stored data is received. Such a request will in the example described herein be received from reconstruction module 5.

In reaction to the request reconstruction module 5 then automatically generates reconstructed data 8 from the stored reduced data 7. To obtain the reconstructed data 8 from the reduced data 7, reconstruction module 5 uses one or more a compressive sensing reconstruction algorithms, in other words one or more reconstruction algorithms that are intended for compressive sensing.

In case for example DCS compression was used before random sampling, the reverse order can now be applied. In detail, first at least one compressive sensing reconstruction algorithm/equation can be used to obtain a full matrix and then inverse DSC can be applied.

In case Huffmann coding was used as an additional conventional compression after the random selection, for the reconstruction, the Huffman code would be interrupted and expands to the random sample values, which then are used to reconstruct the 2D matrix by use of at least one compressive sensing reconstruction algorithm/equation.

In the present case, reconstruction module 5 uses a compressive sensing reconstruction algorithm that is based on L₁-optimization to generate the reconstructed data 8.

For example, algorithms/equations (23) to (31) disclosed on page 688 of the paper "A User's Guide to Compressed Sensing for Communications Systems" by K. Hayashi, M. Nagahara an T. Tanaka, IEICE Trans. Commun., Vol.E96-B, No. 3, March 2013 can be used as reconstruction algorithms/equations.

Another example of algorithms/equations that can be used as reconstruction algorithms/equations within the framework of the inventive method are algorithms/equations (1) to (4) disclosed on pages 4876 and 4877 of the paper "A Systematic Review of Compressive Sensing:Concepts, Implementations and Applications" by M. Rani, S. B. Dhok and R. B. Deshmukh, IEEE Access, Vol. 6, pp. 4875-4894, January 2018.Alternatively or in addition, reconstruction module 5 can obtain the reconstructed data 8 from the reduced data 7 by use of at least one reconstruction algorithm that is based on a greedy approach. Module 5 is accordingly embodied and/or configured. Further reconstruction algorithms/equations from the field of compressive sensing that can alternatively or in addition be used for reconstruction are algorithms/equations according to the so called convex optimization approach and/or the thresholding approach and/or the combinatorial approach and/or the non-convex approach and/or the Bayesian approach. These approaches are for example also described in the paper "A Systematic Review of Compressive Sensing:Concepts, Implementations and Applications" by M. Rani, S. B. Dhok and R. B. Deshmukh, IEEE Access, Vol. 6, pp. 4875-4894, January 2018 which gives an overview of compressive sensing including an overview of different reconstruction approaches.

For sake of completeness it should be noted that while in the purely schematic figure 2 the received data 6 and reconstructed 8 both being a 10x10 2D grid look the same, they will of course not be identical.

The obtained reconstructed data 8 will in a last step be provided as the requested data.

## Claims

1. Method for storing data to and retrieving data from at least one data storage (4), comprising the steps of
- receiving data (6) to be stored, wherein the received data (6) is data that was generated within a framework of computational simulations, wherein the received data (6) is a matrix of data comprising numerical values,
- selecting only part of the received data (6) to obtain reduced data (7),
- storing the reduced data (7) on the at least one data storage (4),
- receiving a request for retrieval of the data,
- using at least one compressive sensing reconstruction algorithm to generate reconstructed data (8) from the reduced data (7), and
- providing the reconstructed data (8) as the requested data,
- wherein the received data (6) comprises or is composed by a number of elements, in particular values, and the reduced data (7) is obtained from the received data (6) by selecting only some of the elements,
- wherein information about the positions of the selected elements within the received data (6) is stored together with the selected elements, wherein a sparse matrix format is used in the storing information about the positions of the selected elements within the received data together with the selected elements.

2. Method according to claim 1,
**characterized in that**
the reduced data (7) is obtained from the received data (6) by sampling the received data (6).

3. Method according to claim 2,
**characterized in that**
the reduced data (7) is obtained from the received data (6) by randomly sampling the received data (6).

4. Method according to any one of the foregoing claims, **characterized in that**
the reduced data (7) is obtained from the received data (6) by creating a sparse sampling of the received data (6).

5. Method according to any one of the foregoing claims,
**characterized in that**
less than 20%, preferably less than 10%, particularly preferably less than 5% of the received data (6) is selected, in particular sampled to obtain the reduced data (7).

6. Method according to any one of the foregoing claims,
**characterized in that**
a user specifies how much of the received data (6) is selected.

7. Method according to any one of the foregoing claims,
**characterized in that**
information about the size of the received data is stored together with the selected data.

8. Method according to any one of the foregoing claims, **characterized in that**
the data is in addition being compressed by use of at least one lossy compression method and/or by use of at least one lossless compression method after it has been received and before part of it has been selected and/or after part of it has been selected and before it is stored.

9. Method according to claim 8, **characterized in that**
at least one corresponding inverse compression method is applied after the request for retrieval of data.

10. Method according to any one of the foregoing claims, **characterized in that**
the reconstructed data (8) is obtained from the reduced data (7) by use of at least one reconstruction algorithm according to the L₁-optimization and/or by use of at least one reconstruction algorithm according to the greedy approach and/or by use of at least one reconstruction algorithm that according to the convex optimization approach and/or by use of at least one reconstruction algorithm according to the thresholding approach and/or by use of at least one reconstruction algorithm according to the combinatorial approach and/or by use of at least one reconstruction algorithm according to the Bayesian approach

11. Method according to any one of the foregoing claims, **characterized in that**
a stream of data is received as data to be stored.

12. Method according to claim 11, **characterized in that**
the stream of data to be stored is received bit after bit and the reduced data is obtained by selecting some of the bits while discarding others.

13. Method according to any one of the foregoing claims, **characterized in that**
the received data (6) is data that was generated within the framework of computational simulations of physical phenomena.

14. Method according to claim 13, **characterized in that**
the received data (6) comprises or is composed by at least one field function.

15. System (1) for storing and retrieving data comprising:
- at least one receiving module (2) being embodied and/or configured for receiving data (6) to be stored, wherein the received data (6) is data that was generated within a framework of computational simulations, wherein the received data (6) is a matrix of data comprising numerical values,
- at least one reducing module (3) being embodied and/or configured for obtaining reduced data (7) by selecting only a part of received data (6) being and/or having been received by the receiving module (2),
- at least one data storage (4) being embodied and/or configured for storing reduced data (7) being and/or having been reduced by the reducing module (3),
- at least one reconstruction module (5) being embodied and/or configured for generating reconstructed data (8) from reduced data (7) saved on the data storage (4) by use of at least one compressive sensing reconstruction algorithm, and
- at least one module embodied and/or configured to provide the reconstructed data (8) as the requested data,
- wherein the received data (6) comprises or is composed by a number of elements, in particular values, and the reduced data (7) is obtained from the received data (6) by selecting only some of the elements,
- wherein information about the positions of the selected elements within the received data (6) is stored together with the selected elements, wherein a sparse matrix format is used in the storing information about the positions of the selected elements within the received data together with the selected elements.

16. Use of the compressive sensing method according to any one of claims 1 to 14, for storing data in a space-saving way.

17. A computer program comprising instructions which, when the program is executed by at least one computer, cause the at least one computer to carry out the method according to any one of claims 1 to 14.

18. A computer-readable medium comprising instructions which, when executed on at least one computer, cause the at least one computer to perform the steps of the method according to any one of claims 1 to 14.

## Patentansprüche

1. Verfahren zum Speichern von Daten auf und zum Abrufen von Daten aus mindestens einem Datenspeicher (4), umfassend die folgenden Schritte
- Empfangen von zu speichernden Daten (6), wobei die empfangenen Daten (6) Daten sind, die im Rahmen rechnergestützter Simulationen erzeugt wurden, wobei die empfangenen Daten (6) eine numerische Werte umfassende Matrix von Daten sind,
- Auswählen nur eines Teils der empfangenen Daten (6), um reduzierte Daten (7) zu erhalten,
- Speichern der reduzierten Daten (7) auf dem mindestens einen Datenspeicher (4),
- Empfangen einer Anforderung zum Abruf der Daten,
- Verwenden mindestens eines Compressive-Sensing-Rekonstruktionsalgorithmus, um rekonstruierte Daten (8) aus den reduzierten Daten (7) zu erzeugen, und
- Bereitstellen der rekonstruierten Daten (8) als die angeforderten Daten,
- wobei die empfangenen Daten (6) eine Anzahl von Elementen, insbesondere Werten, umfassen oder aus diesen zusammengesetzt sind und die reduzierten Daten (7) aus den empfangenen Daten (6) durch Auswählen nur einiger der Elemente erhalten werden,
- wobei Informationen über die Positionen der ausgewählten Elemente innerhalb der empfangenen Daten (6) zusammen mit den ausgewählten Elementen gespeichert werden, wobei beim Speichern der Informationen über die Positionen der ausgewählten Elemente innerhalb der empfangenen Daten zusammen mit den ausgewählten Elementen ein Format für dünnbesetzte Matrizen verwendet wird.

2. Verfahren nach Anspruch 1,
**dadurch gekennzeichnet, dass**
die reduzierten Daten (7) aus den empfangenen Daten (6) durch Abtasten der empfangenen Daten (6) erhalten werden.

3. Verfahren nach Anspruch 2,
**dadurch gekennzeichnet, dass**
die reduzierten Daten (7) aus den empfangenen Daten (6) durch zufälliges Abtasten der empfangenen Daten (6) erhalten werden.

4. Verfahren nach einem der vorstehenden Ansprüche,
**dadurch gekennzeichnet, dass**
die reduzierten Daten (7) aus den empfangenen Daten (6) durch Erstellen einer dünnbesetzten Abtastung der empfangenen Daten (6) erhalten werden.

5. Verfahren nach einem der vorstehenden Ansprüche,
**dadurch gekennzeichnet, dass**
weniger als 20 %, vorzugsweise weniger als 10 %, besonders bevorzugt weniger als 5 % der empfangenen Daten (6) ausgewählt, insbesondere abgetastet werden, um die reduzierten Daten (7) zu erhalten.

6. Verfahren nach einem der vorstehenden Ansprüche,
**dadurch gekennzeichnet, dass**
ein Benutzer definiert, wie viel von den empfangenen Daten (6) ausgewählt wird.

7. Verfahren nach einem der vorstehenden Ansprüche,
**dadurch gekennzeichnet, dass**
Informationen über die Größe der empfangenen Daten zusammen mit den ausgewählten Daten gespeichert werden.

8. Verfahren nach einem der vorstehenden Ansprüche,
**dadurch gekennzeichnet, dass**
die Daten zusätzlich unter Verwendung mindestens eines verlustbehafteten Komprimierungsverfahrens und/oder unter Verwendung mindestens eines verlustfreien Komprimierungsverfahrens komprimiert werden, nachdem sie empfangen worden sind und bevor ein Teil davon ausgewählt worden ist und/oder nachdem ein Teil davon ausgewählt worden ist und bevor sie gespeichert werden.

9. Verfahren nach Anspruch 8,
**dadurch gekennzeichnet, dass**
nach der Anforderung zum Abruf von Daten mindestens ein entsprechendes inverses Komprimierungsverfahren angewendet wird.

10. Verfahren nach einem der vorstehenden Ansprüche,
**dadurch gekennzeichnet, dass**
die rekonstruierten Daten (8) aus den reduzierten Daten (7) unter Verwendung mindestens eines Rekonstruktionsalgorithmus gemäß der L₁-Optimierung und/oder unter Verwendung mindestens eines Rekonstruktionsalgorithmus gemäß dem Greedy-Ansatz und/oder unter Verwendung mindestens eines Rekonstruktionsalgorithmus gemäß dem Ansatz der konvexen Optimierung und/oder unter Verwendung mindestens eines Rekonstruktionsalgorithmus gemäß dem Schwellenwertansatz und/oder unter Verwendung mindestens eines Rekonstruktionsalgorithmus gemäß dem kombinatorischen Ansatz und/oder unter Verwendung mindestens eines Rekonstruktionsalgorithmus gemäß dem bayesschen Ansatz erhalten werden.

11. Verfahren nach einem der vorstehenden Ansprüche,
**dadurch gekennzeichnet, dass**
ein Datenstrom als zu speichernde Daten empfangen wird.

12. Verfahren nach Anspruch 11,
**dadurch gekennzeichnet, dass**
der zu speichernde Datenstrom Bit für Bit empfangen wird und die reduzierten Daten durch Auswählen einiger der Bits unter Verwerfen anderer erhalten werden.

13. Verfahren nach einem der vorstehenden Ansprüche,
**dadurch gekennzeichnet, dass**
die empfangenen Daten (6) Daten sind, die im Rahmen rechnergestützter Simulationen physikalischer Phänomene erzeugt wurden.

14. Verfahren nach Anspruch 13,
**dadurch gekennzeichnet, dass**
die empfangenen Daten (6) mindestens eine Feldfunktion umfassen oder aus dieser zusammengesetzt sind.

15. System (1) zum Speichern und zum Abrufen von Daten, umfassend:
- mindestens ein Empfangsmodul (2), das zum Empfangen von zu speichernden Daten (6) ausgebildet und/oder konfiguriert ist, wobei die empfangenen Daten (6) Daten sind, die im Rahmen rechnergestützter Simulationen erzeugt wurden, wobei die empfangenen Daten (6) eine numerische Werte umfassende Matrix von Daten sind,
- mindestens ein Reduzierungsmodul (3), das zum Erhalten reduzierter Daten (7) durch Auswählen nur eines Teils empfangener Daten (6), die von dem Empfangsmodul (2) empfangen werden und/oder empfangen worden sind, ausgebildet und/oder konfiguriert ist,
- mindestens einen Datenspeicher (4), der zum Speichern reduzierter Daten (7), die von dem Reduzierungsmodul (3) reduziert werden und/oder reduziert worden sind, ausgebildet und/oder konfiguriert ist,
- mindestens ein Rekonstruktionsmodul (5), das zum Erzeugen rekonstruierter Daten (8) aus auf dem Datenspeicher (4) abgelegten reduzierten Daten (7) unter Verwendung mindestens eines Compressive-Sensing-Rekonstruktionsalgorithmus ausgebildet und/oder konfiguriert ist, und
- mindestens ein Modul, das ausgebildet und/oder konfiguriert ist, um die rekonstruierten Daten (8) als die angeforderten Daten bereitzustellen,
- wobei die empfangenen Daten (6) eine Anzahl von Elementen, insbesondere Werten, umfassen oder aus diesen zusammengesetzt sind und die reduzierten Daten (7) aus den empfangenen Daten (6) durch Auswählen nur einiger der Elemente erhalten werden,
- wobei Informationen über die Positionen der ausgewählten Elemente innerhalb der empfangenen Daten (6) zusammen mit den ausgewählten Elementen gespeichert werden, wobei beim Speichern der Informationen über die Positionen der ausgewählten Elemente innerhalb der empfangenen Daten zusammen mit den ausgewählten Elementen ein Format für dünnbesetzte Matrizen verwendet wird.

16. Verwendung des Compressive-Sensing-Verfahrens nach einem der Ansprüche 1 bis 14 zum platzsparenden Speichern von Daten.

17. Computerprogramm, umfassend Anweisungen, die bei Ausführung des Programms durch mindestens einen Computer den mindestens einen Computer dazu veranlassen, das Verfahren nach einem der Ansprüche 1 bis 14 durchzuführen.

18. Computerlesbares Medium, umfassend Anweisungen, die bei Ausführung auf mindestens einem Computer den mindestens einen Computer dazu veranlassen, die Schritte des Verfahrens nach einem der Ansprüche 1 bis 14 vorzunehmen.

## Revendications

1. Procédé de mise en mémoire de données et de recherche de données dans au moins une mémoire (4) de données, comprenant les stades de
- recevoir une donnée (6) à mettre en mémoire, dans lequel la donnée (6) reçue est une donnée, qui est créée dans une structure de simulations informatiques, dans lequel la donnée (6) reçue est une matrice de données comprenant des valeurs numériques,
- sélectionner seulement une partie de la donnée (6) reçue afin d'obtenir une donnée (7) réduite,
- mettre la donnée (7) réduite dans la mémoire (4) de la au moins une donnée,
- recevoir une demande de recherche de la donnée,
- utiliser au moins un algorithme de reconstruction de détection par compression pour créer une donnée (8) reconstruite à partir de la donnée (7) réduite, et
- donner la donnée (8) reconstruite comme donnée demandée,
- dans lequel la donnée (6) reçue comprend ou est composée d'un nombre d'éléments, en particulier de valeurs, et la donnée (7) réduite est obtenue à partir de la donnée (6) reçue en sélectionnant seulement certains des éléments,
- dans lequel de l'information sur les positions des éléments sélectionnés dans la donnée (6) reçue est mise en mémoire ensemble avec les éléments sélectionnés, dans lequel un format clairsemé de matrice est utilisé dans l'information de mise en mémoire sur les positions des éléments sélectionnés dans la donnée reçue ensemble avec les éléments sélectionnés.

2. Procédé suivant la revendication 1,
**caractérisé en ce que**
la donnée (7) réduite est obtenue à partir de la donnée (6) reçue par échantillonnage de la donnée (6) reçue.

3. Procédé suivant la revendication 2,
**caractérisé en ce que**
la donnée (7) réduite est obtenue à partir de la donnée (6) reçue par échantillonnage aléatoire de la donnée (6) reçue.

4. Procédé suivant l'une quelconque des revendications précédentes,
**caractérisé en ce que**
la donnée (7) réduite est obtenue à partir de la donnée (6) reçue en créant un échantillonnage clairsemé de la donnée (6) reçue.

5. Procédé suivant l'une quelconque des revendications précédentes,
**caractérisé en ce que**
moins de 20 %, de préférence moins de 10 %, d'une manière particulièrement préférée moins de 5 % de la donnée (6) reçue est sélectionnée en étant, en particulier, échantillonnée pour obtenir la donnée (7) réduite.

6. Procédé suivant l'une quelconque des revendications précédentes,
**caractérisé en ce qu'**
un utilisateur précise combien de la donnée (6) reçue est sélectionnée.

7. Procédé suivant l'une quelconque des revendications précédentes,
**caractérisé en ce que**
de l'information sur la dimension de la donnée reçue est mise en mémoire ensemble avec la donnée sélectionnée.

8. Procédé suivant l'une quelconque des revendications précédentes,
**caractérisé en ce que**
la donnée est, en plus comprimée par utilisation d'au moins un procédé de compression avec perte et/ou par l'utilisation d'au moins un procédé de compression sans perte, après qu'elle a été reçue et avant qu'une partie de celle-ci ait été sélectionnée, et/ou après qu'une partie de celle-ci ait été sélectionnée et avant qu'elle ait été mise en mémoire.

9. Procédé suivant la revendication 8,
**caractérisé en ce qu'**
au moins un procédé de compression inverse correspondant est appliqué après la demande de recherche de données.

10. Procédé suivant l'une quelconque des revendications précédentes,
**caractérisé en ce que**
la donnée (8) reconstruite est obtenue à partir de la donnée (7) réduite par utilisation d'au moins un algorithme de reconstruction suivant l'optimisation L₁ et/ou par utilisation d'au moins un algorithme de reconstruction suivant la solution gourmande et/ou par utilisation d'au moins un algorithme de reconstruction, qui est suivant la solution d'optimisation convexe, et/ou par utilisation d'au moins un algorithme de reconstruction suivant la solution à seuil et/ou par utilisation d'au moins un algorithme de reconstruction suivant la solution combinatoire et/ou par utilisation d'au moins un algorithme de reconstruction suivant la solution bayésienne.

11. Procédé suivant l'une quelconque des revendications précédentes,
**caractérisé en ce qu'**
un flux de données est reçu comme données à mettre en mémoire.

12. Procédé suivant la revendication 11,
**caractérisé en ce que**
le flux de données à mettre en mémoire est reçu bit après bit et la donnée réduite est obtenue en sélectionnant certains de ces bits, tout en en écartant d'autres.

13. Procédé suivant l'une quelconque des revendications précédentes,
**caractérisé en ce que**
la donnée (6) reçue est une donnée, qui est créée dans la structure de simulations informatiques de phénomènes physiques.

14. Procédé suivant la revendication 13,
**caractérisé en ce que**
la donnée (6) reçue comprend ou est composée d'au moins une fonction de champ.

15. Système (1) de mise en mémoire et de recherche d'une donnée comprenant :
- au moins un module (2) de réception incorporé et/ou configuré pour recevoir une donnée (6) à mettre en mémoire, dans lequel la donnée (6) reçue est une donnée, qui a été créée dans une structure de simulations informatiques, dans lequel la donnée (6) reçue est une matrice comprenant des valeurs numériques,
- au moins un module (3) de réduction étant mis en œuvre et/ou configuré pour obtenir une donnée (7) réduite en sélectionnant seulement une partie de la donnée (6) reçue étant ou ayant été reçue par le module (2) de réception,
- au moins une mémoire (4) de données étant mise en œuvre et/ou configurée pour mettre une donnée (7) réduite en mémoire étant et/ou ayant été réduite par le module (3) de réduction,
- au moins un module (5) de reconstruction étant mis en œuvre et/ou configuré pour créer une donnée (8) de reconstruction à partir de la donnée (7) réduite sauvegardée dans la mémoire (4) de données par utilisation d'au moins un algorithme de reconstruction de détection par compression, et
- au moins un module mis en œuvre et/ou configuré pour donner la donnée (8) reconstruite comme donnée demandée,
- dans lequel la donnée (6) reçue comprend ou est composée d'un nombre d'éléments, en particulier de valeurs, et la donnée (7) réduite est obtenue à partir de la donnée (6) reçue en sélectionnant seulement certains des éléments,
- dans lequel de l'information sur les positions des éléments sélectionnés dans la donnée (6) reçue est mise en mémoire ensemble avec les éléments sélectionnés, dans lequel un format clairsemé de matrice est utilisé dans l'information de mise en mémoire sur les positions des éléments sélectionnés dans la donnée reçue ensemble avec les éléments sélectionnés.

16. Utilisation du procédé de détection par compression suivant l'une quelconque des revendications 1 à 14, pour mettre en mémoire des données d'une façon économisant de l'espace.

17. Un programme d'ordinateur comprenant des instructions, qui, lorsque le programme est exécuté par au moins un ordinateur, font que le au moins un ordinateur exécute le procédé suivant l'une quelconque des revendications 1 à 14.

18. Un support déchiffrable par ordinateur comprenant des instructions, qui, lorsqu'elles sont exécutées par au moins un ordinateur, font que le au moins un ordinateur effectue les stades du procédé suivant l'une quelconque des revendications 1 à 14.
